# EUROPEAN PATENT APPLICATION

(11) **EP 1 662 402 A1**
(43) Date of publication of application: **31.05.2006**
(21) Application number: 04772684.9
(22) Date of filing: 02.09.2004
(51) Int. Cl.: G06F 13/00

(54) **INFORMATION PROCESSING APPARATUS AND ELECTRONIC DEVICE**

(30) Priority: 02.09.2003 JP 2003309626; 02.09.2003 JP 2003309627
(71) Applicant: NIKON CORPORATION, Tokyo 100-8331 (JP); Nikon Technologies, Inc., Tokyo 142-0043 (JP)
(72) Inventor: NOZAKI, Hirotake; c/o NIKON CORPORATION (Intellec, 3-chome, Chiyoda-ku, Tokyo; 1008331 (JP); TANAKA, Masahide; c/o NIKON CORPORATION (Intellec, 3-chome, Chiyoda-ku, Tokyo; 1008331 (JP); OHMURA, Akira; c/o NIKON CORPORATION (Intellectua, Ch iyoda-ku, Tokyo; 1008331 (JP); OHTA, Tadashi; c/o NIKON CORPORATION (Intellectua, Ch iyoda-ku, Tokyo; 1008331 (JP)
(74) Representative: Walaski, Jan Filip
(86) International application number: PCT/JP2004/012730
(87) International publication number: WO 2005/024638

(57) **Abstract**

An information process apparatus is provided with an interface transmitting and receiving data between a plurality of display devices provided with a display portion of showing information and electronic appliances, a reception means of receiving a given data from the electronic appliance via the interface, a judgment means of judging an action status of the plurality of display devices via the interface in accordance with a reception result of the given data by the reception means, and an output means of outputting a given display signal to a display device of which the action state is judged to be in a given state by the judgment device out of the plurality of the display devices in accordance with the given data via the interface.

## Description

### TECHNICAL FIELD

The present invention relates to a display method at a time when showing various display data output from the digital camera and/or the consumer electronics equipment with another electronic apparatus with a display screen connected via a home network.

### BACKGROUND ART

Conventionally, the image data shot or played back by the digital camera has been checked on the tiny LCD monitor provided with the digital camera. And, for checking it on the larger screen, it can be checked on the large screen of the ordinary TV monitor intended for home use by outputting the analog or digital video signal from the digital camera. Moreover, recently, various wireless LAN standards have been proposed, and among them, UWB (Ultra Wide Band) and IEEE802.11g, which are one of the close range wireless communication standards, achieves a data transfer rate of 100Mbps, and the queuing time accompanied by the transfer of high capacity data has been largely shortened. With these functions fitted into the home electronic appliances and the wireless LAN connection between each of the appliances, it now becomes possible to construct the unprecedented all-new home-use network. As the construction embodiment of this home-use network, by placing the personal computer at the center of the network, and using it as the control server, the data can be easily sent/received to and from each of another electronic equipments. Or, without using the above-mentioned control server particularly, the data can be sent/received by the direct connection between various electronic appliances more than two equipments.

In Japanese laid-open Patent Application H11-266378 official gazette, the digital camera is disclosed that is connected to one apparatus or more via the network, and selects the displayed executable function, and actuates the specific apparatus in accordance with the selected function. In Japanese laid-open Patent Application 2000-315129 official gazette, the data processor is disclosed that sets the specific image process condition with respect to the peripheral apparatus, and executes image editprocess to image information input from the peripheral apparatus based upon the image process condition, and outputs the processed image information to any of the apparatus. In Japanese laid-open Patent Application 2000-315182 official gazette, the data processor is disclosed that obtains the status of the peripheral apparatus, and shows the system structure as the virtual network with the distinguishable icon. In Japanese laid-open Patent Application 2000-358207 official gazette, the image information processor is disclosed that powers on to the external device by detecting the attachment of the information medium. In Japanese laid-open Patent Application 2001-169198 official gazette, the signal transmitter is disclosed that informs the viewer of the TV receiver of any of information supplied from any of the information apparatus with the TV receiver connected to the plurality of the information apparatus. In Japanese laid-open Patent Application 2002-49539 official gazette, the network connector is disclosed that retrieves the equipment with the display function from the equipments connected on the network, and transmits the desired information. In Japanese laid-open Patent Application 2002-199324 official gazette, the playback apparatus is disclosed that recognizes the type of the plurality of the electronic equipments, and determines the electronic apparatus to which the data communication is executed based upon the type information about the recognized electronic equipment.

### DISCLOSURE OF THE INVENTION

### PROBLEMS TO BE SOLVED BY THE INVENTION

The conventional prior art given in the above is a relatively simple system that, for example, selects the apparatus with the specific function such as the display function, the print function and the like, and causes the apparatus to show or operate, or shows the information from another apparatus on the specific apparatus.

With a plurality of electronic appliances connected through the home-use network, the present invention provides an information processor that, when an intention to transmit information is issued from a random electronic appliance to another electronic appliance, selects a display apparatus with a suitable state among the plurality of the electronic appliances in accordance with the intent, and can show the information transmitted from the electronic appliances with this display apparatus.

### MEANS FOR SOLVING THE PROBLEMS

According to a first aspect of the present invention, an information process apparatus is provided with an interface transmitting and receiving data between a plurality of display devices provided with a display portion of showing information and an electronic appliance, a reception means of receiving a given data from the electronic appliance via the interface, a judgment means of judging an action status of the plurality of the display devices via the interface in accordance with a reception result of the given data by means of the reception means, and an output device means of outputting a given display signal to a display device of which the action state is judged to be in a given state by the judgment device out of the plurality of the display devices in accordance with the given data via the interface. Namely, the management server of the information process apparatus detects the display device in the given action state, and outputs the data received from the electronic appliance such as the digital camera and the like, so that the user does not need to select the display device in the given action state.
According to a second aspect of the present invention, in the information process apparatus set forth in the 1st aspect, it is preferable that the action state being the given state refers to the display device in an operable state.
According to a third aspect of the present invention, in the information process apparatus set forth in the 2nd aspect, it is preferable that the status of the display device being operable refers to the power-ON of the display portion of the display device.
According to a fourth aspect of the present invention, in the information process apparatus set forth in the 1st aspect, it is preferable that the output device is further provided with a selection means of selecting a given display device from a plurality of display devices when the judgment means judges that there is the plurality of the display devices of which the action state is in the given state.
According to a fifth aspect of the present invention, in the information process apparatus set forth in the 4th aspect, it is preferable that the selection means selects all display devices of which the action state is in the given state.
According to a sixth aspect of the present invention, in the information process apparatus set forth in the 4th aspect, it is preferable that there is provided a setting means of setting beforehand a priority order of a display device for showing the information, and the selection means selects the display device in accordance with the priority order.
According to a seventh aspect of the present invention, in the information process apparatus set forth in the 4th aspect, it is preferable that the reception means further receives a data of specifying a display device from the electronic appliance in addition to the given data, and the selection means selects a display device specified by the data of specifying a display device.
According to a eighth aspect of the present invention, in the information process apparatus set forth in the 4th aspect, it is preferable that there is further provided a time counting means of counting down an elapsed time since the display device is detected to be in a given action state, and the selection means selects a display device with a short elapsed time counted down by the time counting means.
According to a ninth aspect of the present invention, in the information process apparatus set forth in the 1st aspect, it is preferable that there is further provided a time counting means of counting down a given time interval, and the reception means receives a given data from the electronic appliance every given time interval counted down by the time counting means.
According to a tenth aspect of the present invention, in the information process apparatus set forth in the 1st aspect, it is preferable that the given data from the electronic appliance refers to a data that indicates a passage state in the middle of a given action being conducted by the electronic appliance.
According to an eleventh aspect of the present invention, in the information process apparatus set forth in the 1st aspect, it is preferable that the given data from the electronic appliance refers to a data indicating that the electronic appliance starts a given action.
According to a twelfth aspect of the present invention, in the information process apparatus set forth in the 1st aspect, it is preferable that the given data from the electronic appliance refers to a data indicating that the electronic appliance ends a given action.
According to a thirteenth aspect of the present invention, in the information process apparatus set forth in the 1st aspect, it is preferable that the output means outputs the given display signal for a given certain period of time.
According to a fourteenth aspect of the present invention, an information process apparatus is provided with an interface transmitting and receiving data between a plurality of display devices provided with a display portion of showing information and an electronic appliance, a reception means of receiving a given data from the electronic appliance via the interface, a judgment means of judging action status of the plurality of the display devices via the interface in accordance with a reception result of the given data by means of the reception means, and a controller controlling so as to cause a given display device of the plurality of the display devices to be in an operable state in accordance with a judgment result of the judgment device via the interface. Namely, once the management server receives the data from the electronic appliance, the management server automatically controls the given display device so as to become in the operable state, so that the user does not need to select the display device. According to a fifteenth aspect of the present invention, in the information process apparatus set forth in the 14th aspect, it is preferable that the operable state refers to the power-ON of the display portion of the display device.
According to a sixteenth aspect of the present invention, in the information process apparatus set forth in the 14th aspect, it is preferable that there is further an output means of outputting a given display signal to the display device in the operable state via the interface in accordance with the given data.
According to a seventeenth aspect of the present invention, in the information process apparatus set forth in the 14th aspect, it is preferable that the controller controls so as to cause all display devices judged to be in an inoperable state by the judgment device out of the plurality of the display devices to be in an operable state.
According to a eighteenth aspect of the present invention, in the information process apparatus set forth in the 14th aspect, it is preferable that there is further provided a setting means of setting beforehand a priority order of a display device for showing the information, and the controller controls so as to cause the display device to be in an operable state in accordance with the priority order.
According to a nineteenth aspect of the present invention, in the information process apparatus set forth in the 14th aspect, it is preferable that the reception means further receives a data of specifying a display device from the electronic appliance in addition to the given data, and the controller controls so as to cause a display device specified by the data of specifying a display device to be in an operable state.
According to a twentieth aspect of the present invention, in the information process apparatus set forth in the 14th aspect, it is preferable that there is further provided a time counting means of counting down a given time interval, and the reception means receives a given data from the electronic appliance every given time interval counted down by the time counting means. According to a twenty-first aspect of the present invention, in the information process apparatus set forth in the 14th aspect, it is preferable that the given data from the electronic appliance refers to a data that indicates a passage state in the middle of a given action conducted by the electronic appliance.
According to a twenty-second aspect of the present invention, in the information process apparatus set forth in the 14th aspect, it is preferable that the given data from the electronic appliance refers to a data indicating that the electronic appliance starts a given action.
According to a twenty-third aspect of the present invention, in the information process apparatus set forth in the 14th aspect, it is preferable that the given data from the electronic appliance refers to a data indicating that the electronic appliance ends a given action.
According to a twenty-fourth aspect of the present invention, in the information process apparatus set forth in the 14th aspect, it is preferable that the output means outputs the given display signal for a given certain period of time.
According to a twenty-fifth aspect of the present invention, in the information process apparatus set forth in the 24th aspect, it is preferable that the controller causes the given display device to be in an inoperable state after the certain period of time has elapsed.
According to a twenty-sixth aspect of the present invention, in the information process apparatus set forth in the 14th aspect, it is preferable that the given display device refers to a cell phone, and, when the judgment means judges any of the plurality of the display devices to be in an inoperable state, the controller controls so as to cause the cell phone to be in an operable state.
According to a twenty-seventh aspect of the present invention, an information process apparatus is provided with an interface transmitting and receiving data to and from a plurality of display devices provided with a display portion of showing information, a controller controlling so as to receive a given data from a first display device of the plurality of the display devices, and transmit a given display signal to a second display device different from the first display device via the interface, and a directive means of directing the controller to transmit the given display signal to the second display device, and simultaneously, the first display device so as to cause the display portion of the first display device to become in an inoperable state via the interface. Namely, the management server transmits the data transmitted from the first display device to the second display device, and controls the display portion of the first display device so as to be in an inoperable state, so that the power is saved. According to a twenty-eighth aspect of the present invention, in the information process apparatus set forth in any of the 1st, 14th or 27th aspect, it is preferable that the interface transmits and receives the data to and from the plurality of the display devices via the network.
According to a twenty-ninth aspect of the present invention, in the information process apparatus set forth in any of the 1st, 6th, 14th, 18th or 27th aspect, it is preferable that the information includes at least any of image information, graphic information or text information.

According to a thirtieth aspect of the present invention, an electronic appliance is provided with an interface transmitting and receiving a data to and from a plurality of display devices provided with a display portion of showing information, a judgment means of judging action status of the plurality of display devices via the interface, and an output means of outputting a given display signal to a display device of which the action state is judged to be in a given state by the judgment device in the plural display devices via the interface . Namely, when the data is output from the electronic appliance such as the digital camera and the like, the digital camera detects the display device in the given action state, and automatically outputs the data to the detected display device, so that the user does not need to select the display device in the given action state.
According to a thirty-first aspect of the present invention, in the electronic appliance set forth in the 30th aspect, it is preferable that the action state being in the given state refers to the display device in an operable state.
According to a thirty-second aspect of the present invention, in the electronic appliance set forth in the 31st aspect, it is preferable that the operable state refers to the power-ON of the display portion of the display device.
According to a thirty-third aspect of the present invention, in the electronic appliance set forth in the 30th aspect, it is preferable that, when the judgment means judges that there is a plurality of display devices of which the action state is in the given state, the output device further is provided with a selection means of selecting a given display device from the plurality of the display devices.
According to a thirty-fourth aspect of the present invention, in the electronic appliance set forth in the 33rd aspect, it is preferable that the selection means selects all display devices of which the action state is in the given state.
According to a thirty-fifth aspect of the present invention, in the electronic appliance set forth in the 33rd aspect, it is preferable that there is further provided a setting means of setting a priority order of a display device for showing the information, and the selection means selects the display device in accordance with the priority order.
According to a thirty-sixth aspect of the present invention, in the electronic appliance set forth in the 30th aspect, the given display signal preferably refers to a signal that indicates a passage state in the middle of a given action being conducted by the electronic appliance.
According to a thirty-seventh aspect of the present invention, in the electronic appliance set forth in the 30th aspect, the given display signal preferably refers to a signal indicating that the electronic appliance starts a given action.
According to a thirty-eighth aspect of the present invention, in the electronic appliance set forth in the 30th aspect, it is preferable that the given display signal preferably refers to a signal indicating that the electronic appliance ends a given action.
According to a thirty-ninth aspect of the present invention, in the electronic appliance set forth in the 30th aspect, it is preferable that the output means outputs the given display signal for a given certain period of time.
According to a fortieth aspect of the present invention, in the electronic appliance set forth in the 30th aspect, it is preferable that there is further provided a display portion of showing information, and a directive means of directing the output means to output the given display signal to the display device of which the action state is in a given state, and simultaneously, directing the first display device so as to cause the display portion of the first display device to become in an inoperable state via the interface.
According to a forty-first aspect of the present invention, an electronic appliance is provided with an interface transmitting and receiving data to and from a plurality of display devices provided with a display portion of showing information, a judgment means of judging action status of the plurality of the display devices via the interface, and a controller controlling so as to cause a given display device of the plurality of the display devices to be in an operable state via the interface in accordance with a judgment result of the judgment means. Namely, the electronic appliance such as the digital camera automatically controls the given display device so as to be in an operable state, so that the user does not need to select the display device.
According to a forty-second aspect of the present invention, in the electronic appliance set forth in the 41st aspect, it is preferable that the operable state refers to the power-ON of the display portion of the display device.
According to a forty-third aspect of the present invention, in the electronic appliance set forth in the 41st aspect, it is preferable that there is further provided a display portion of showing information, and a directive means of directing the controller so as to cause a given display device of the plurality of the display devices to be in an operable state, and cause the display portion to become in an inoperable state. According to a forty-fourth aspect of the present invention, in the electronic appliance set forth in the 41st aspect, it is preferable that the given display device refers to a cell phone, and the controller controls so as to cause the cell phone to be in an operable state if the judgment means judges any of the plurality of the display devices to be in an inoperable state.
According to a forty-fifth aspect of the present invention, in the electronic appliance set forth in the 41st aspect, it is preferable that the controller controls so as to cause all display devices judged to be in an inoperable state by the judgment device out of the plurality of the display devices to be in an operable state.
According to a forty-sixth aspect of the present invention, in the electronic appliance set forth in the 41st aspect, it is preferable that there is further provided a setting means of setting a priority order of a display device for showing the information, and the controller controls so as to cause the display device to be in an operable state in accordance with the priority order.
According to a forty-seventh aspect of the present invention, in the electronic appliance set forth in the 41st aspect, it is preferable that there is further provided an output means of outputting a given display signal to the display device in the operable state via the interface.
According to a forty-eighth aspect of the present invention, in the electronic appliance set forth in the 47th aspect, it is preferable that the given display signal refers to a signal indicating a passage state in the middle of a given action being conducted by the electronic appliance.
According to a forty-ninth aspect of the present invention, in the electronic appliance set forth in the 47th aspect, the given display signal preferably refers to a signal that indicates the electronic appliance starts a given action. According to a fiftieth aspect of the present invention, in the electronic appliance set forth in the 47th aspect, the given display signal preferably refers to a signal that indicates the electronic appliance ends a given action.
According to a fifty-first aspect of the present invention, in the electronic appliance set forth in the 47th aspect, it is preferable that the output means outputs the given display signal for a given certain period of time.
According to a fifty-second aspect of the present invention, in the electronic appliance set forth in the 51st aspect, it is preferable that the controller causes the given display device to be in an inoperable state after the certain period of time has elapsed.
According to a fifty-third aspect of the present invention, in the electronic appliance set forth in any of the 30th or 41st aspect, it is preferable that the interface transmits and receives the data to and from the plurality of the display devices via a network.
According to a fifty-forth aspect of the present invention, in the electronic appliance set forth in any of the 30th, 35th, 41st, 43rdor 46th aspect, it is preferable that the information includes at least any of image information, graphic information or text information.
The means given in the above may be replaced by the unit.

### BRIEF DESCRIPTION OF THE DRAWINGS

Fig. 1 is a block view showing the home appliances constructing the home-use network of the present small invention.
Fig. 2 is a block view showing the internal structure of the management server of the present invention.
Fig. 3 is a block view showing the internal structure of the digital camera.
Fig. 4 is a block view showing the internal structure of the TV monitor of the present invention.
Fig. 5 is a flow chart showing the action when the management server controls the home-use network according to the present invention.
Fig. 6 is a flow chart showing the action when the management server controls the home-use network according to the present invention.
Fig. 7 is a flow chart showing the action when the management server controls the home-use network according to the present invention.
Fig. 8 is a flow chart showing the action when the management server controls the home-use network according to the present invention.
Fig. 9 is a view showing one example of the display form of the display device of the present invention.
Fig. 10 is a block view showing the home appliances constructing the home-use network of the second example embodiment of the present invention.
Fig. 11 is a flow chart explaining the action of the home-use network of the second example embodiment of the present invention.

### BEST MODE FOR CARRYING OUT THE INVENTION

Example embodiments of the present invention will be described below while referring to diagrams.

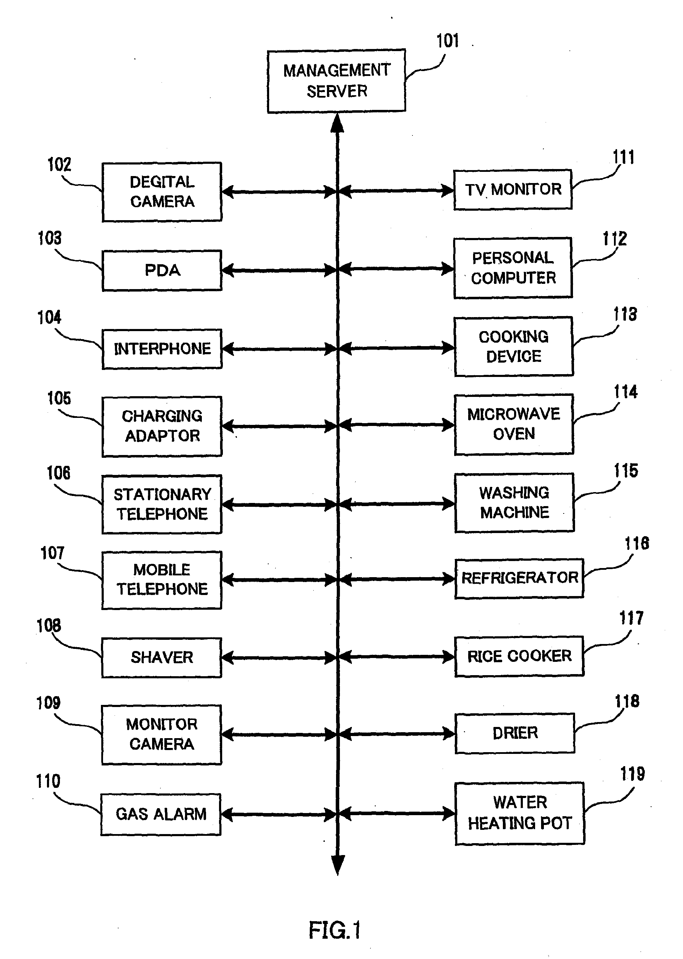

Fig. 1 is a structure view of a home-use network using an information processor of the present invention. In this diagram, the home-use network is provided with the personal computer as management server 101. With this network, a home electronic appliance such as digital camera 102, PDA (Personal Digital Assistant) 103, interphone 104, charging adaptor 105, stationary telephone 106, cell telephone 107, shaver 108, monitor camera 109, gas alarm 110, TV monitor 111, personal computer 112, cooking device 113, microwave oven 114, washing machine 115, refrigerator 116, rice cooker 117, drier 118, and water heating pot 119 and the like is constructed so as to be attachable or detachable over the network. A method of the connection to the network from the home electronic appliance may be any one of the wireless or wired connection as described in the above. And, with respect to digital camera 102, cell telephone 107, TV monitor 111, and the like, there are many cases where the plural home appliances are usually available at home, respectively, for a private use or a private room. A signal from the home appliance such as digital camera 102, etc capable of shooting an image, the home appliance provided with various timers or sensors of washing machine 115, etc, or the alarm devices is transmitted to management server 101 over the network. Management server 101 creates a display signal based upon the these received signals, and transmits the display signal to the home appliance provided with a display means of showing another image or text information such as TV monitor 111, and the like. A way of showing by the display means may be not limited to a screen with the vast number of pixels enabling image data or graphic data to be shown, but may be a LCD panel and the like with the small number of pixels enabling only the text information to be shown only for setting a timer alone. Thus, it can be said that the home appliances referred to here are substantially data output apparatus with respect to other home appliances, and data display apparatus. And further, as the way of showing, they may be constructed so as to notify the timer end or the alarm, etc at an occurrence of an abnormal condition with the sound. With this construction, for example, even when the user is distant away from the washing machine, the buzzer sound from the display apparatus on hand notifies the user of the timer end for the washing machine.

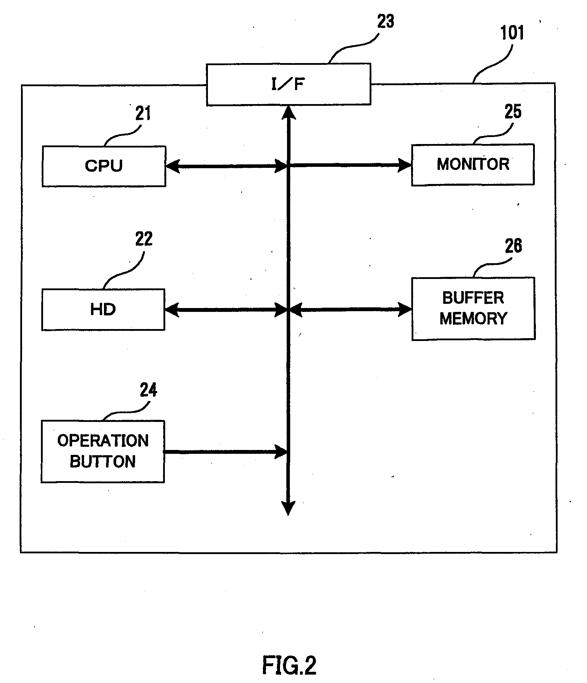

Fig. 2 is a block view showing an internal structure of management server 101 described in the above. In this diagram, CPU 21 controls in such a manner that necessary programs are readout from hard disc 22 where various programs for processing information input from the personal computer in operation as the management server and/or from the respective home appliances via interface 23 are stored, and with such the read-out of the programs, the data executed by given process is output to the abovementioned respective home appliances with the display portion via interface 23. Operation button 24 consisting of the keyboard, the mouse and the like is used not only in operating the personal computer as the usual PC but also in setting priority, etc when selecting a display device to be described later. Monitor 25 shows necessary information when implementing these respective operations. Buffer memory 26 stores input various image data and/or text information input, and stores graphic data such as a bar display indicating a status in progress of the timer created as needed.

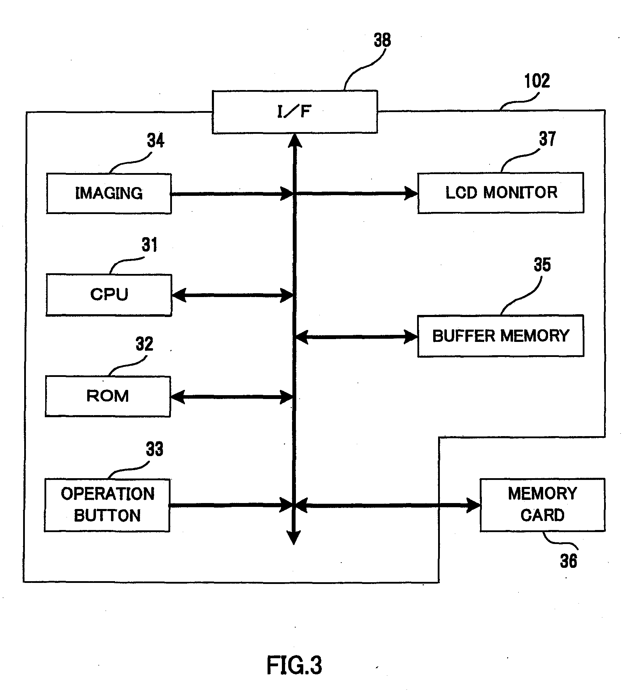

Fig. 3 shows a summary internal structure of digital camera 102 of one of the data output apparatus described in the above. CPU 31 controls in such a manner that a given program is read out from ROM 23 where a program for causing an action as the camera to be taken is stored, and a subject is shot by imaging device 34 in accordance with a directive of operation button 33 consisting of a shutter button, etc, and after the shot subject is converted into digital data, process such as gamma correction, white balance, etc is executed to the digital data, and by compressing the image data as needed, the image data is stored in memory card 37. Buffer memory 35 is used for temporarily storing image data before and after process. LCD monitor 37 is used for checking a shooting angle prior to the shooting, image data after shooting or image data played back from memory card 36. When showing the image on a usual home TV monitor with the large screen rather than showing it on LCD monitor 37, the image data is sent to management server 101 by operating operation button 33 via interface 38. Then, management server 101 controls so as to select a given display device, and show the image from digital camera 102 on a display screen thereof. This sequence will be described later.

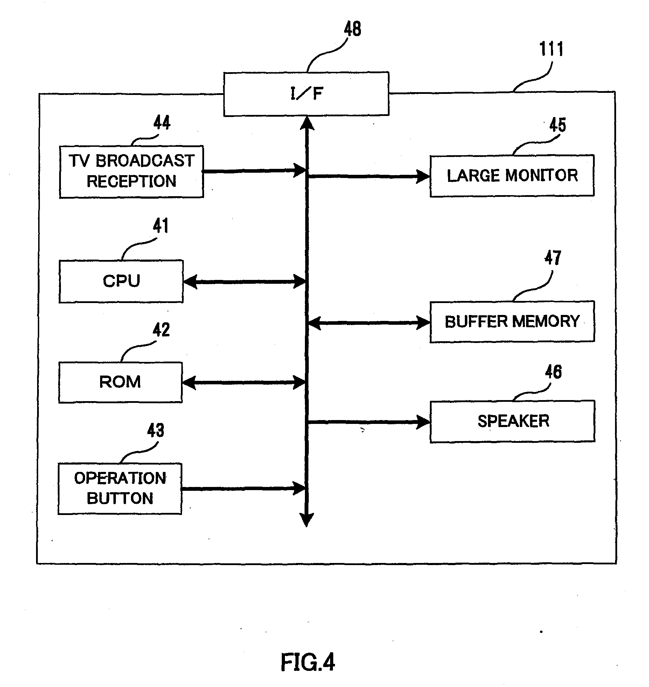

Fig. 4 shows a summary internal structure of home TV monitor 111 receiving a normal broadcast as one of the display devices described in the above. CPU 41 controls so as to read out a given program from ROM 42 where a program for receiving the normal TV broadcast is stored, and show the normal TV broadcast received by TV broadcast receiver 44 in accordance with a setting of operation button 43 for a channel and/or a sound volume on large monitor 45, and play back the sound with speaker 46. Buffer memory 47 temporarily stores an image, a graphic or text data input from the electronic appliances via interface 48 rather than the normal TV data.

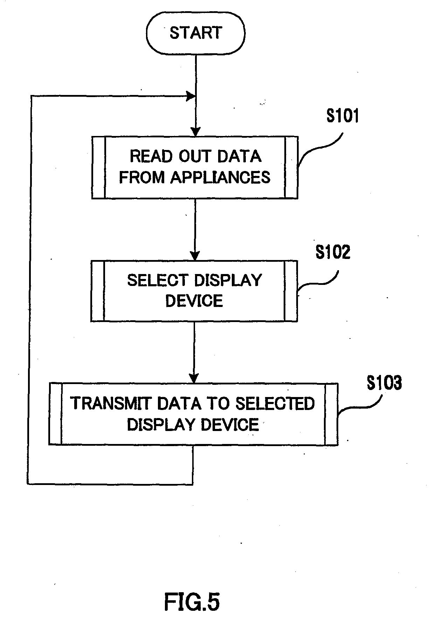

An action of management server 101 will be described using Figs.5 to 8. Fig. 5 is a summary action flow of management server 101. First off, in step S101, management server 101 detects a home appliance directing a data transfer to management server 101 from the peripheral appliances connected to management server 101, and reads out a data from the detected home appliance. In step S102, a display device showing the read-out data is selected. In step S103, a data for use in display is transmitted to the selected display device. A detail of the abovementioned three steps will be given below on an individual basis.

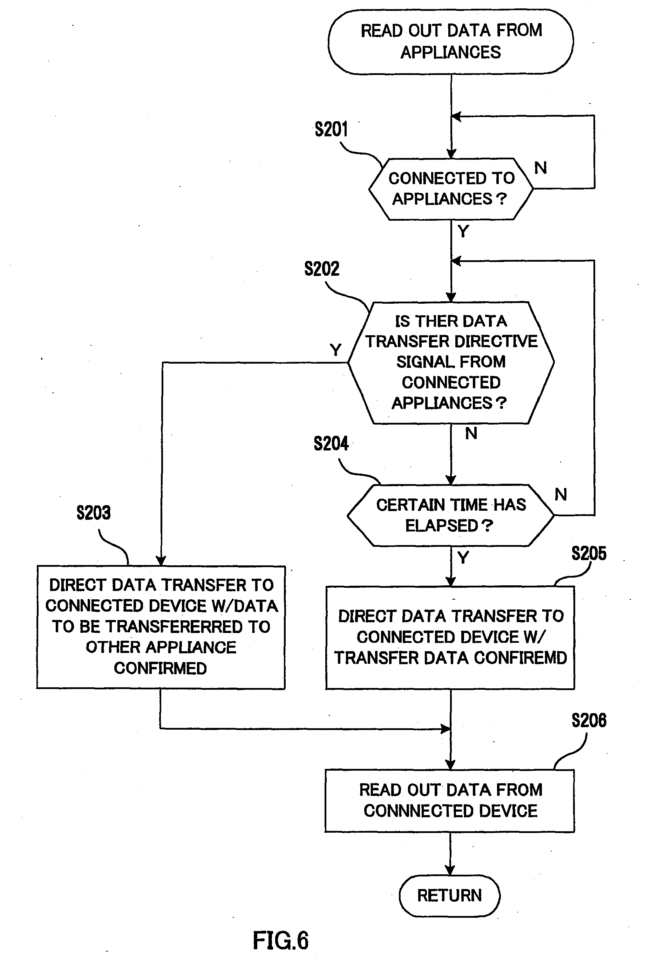

Fig. 6 is a flow explaining a reading out of a data from a home appliance connected to management server 101. In step S201, first of all, a home appliance connected to management server 101 is detected. This status of the home appliance being connected means that a transmission/reception of data between the home appliance and management server 101 is made possible. More specifically, in addition to a normal operation of the home appliance, a stand-by mode causing only a part of power to be turned on and the like is included in this status. Also, in a case of a cable connection, it is a matter of course that the cable is required to be connected beforehand. In step S202, it is judged whether or not a directive signal to start transmission of any of data to management server from the connected home appliance is output. When the home appliance is digital camera 102, a setting of digital camera 102 to an external output mode with operation button 33 of digital camera 102 by the user corresponds to this output. And, when the home appliance is washing machine 115 or cooking device 113, a start of a given action of each home appliance like washing or an action of a timer also corresponds to this output. When the home appliance is alarm 110, monitor camera 109, etc, a detection of something abnormal corresponds to this judgment, too. Usually, a plurality of home appliances is connected on the network, and so when a data transfer is directed from one of these home appliances, in step S203, a presence or a non-presence of the data for transfer from the one of the home appliances to other home appliances is checked, and then the data transfer is directed to the home appliance with the presence of the data transfer confirmed. In step S206, the data from the home appliance directed to transfer the data is read out. With these flow steps, the data necessary to show from the home appliance is received by management server 101 without omission, so that it becomes possible to cause a display device to be described later to show in accordance with a plurality of received data.

In step S202, when there is no data transfer directive from any of the home appliances, the flow proceeds to step S204, and it is judged whether or not a certain time has elapsed. As this certain time, a time interval by an order from one minute to one hour is set to management server 101 beforehand according to the home appliance. When the certain time has not elapsed, the flow gets back to step S202, and the data transfer directive from the connected appliance is waited for. In step S204, when it is judgedthat the certain time has elapsed, the flow proceeds to step 5205, and the presence or non-presence of the data for transfer is checked with respect to the connected home appliances, and the data transfer is directed to the home appliance with the presence of the data transfer confirmed. Then, in step S206, the data is read out from the home appliance directed to transfer the data.

The data transferred from these home appliances are different according to the home appliances. More specifically, when the home appliance is a device capable of outputting image data of digital camera 102, PDA 103, cell telephone 107, monitor camera 109, etc, the data is its output image data. When the home appliance is a device acting in accordance with the timer such as cooking device 113, microwave oven 114, washing machine 115, rice cooker 117, drier 118, water heating pot 119, etc, the data is a data that indicates a timer start, a setting-up time, an elapsed time, etc. When the home appliance is gas alarm 110, refrigerator 116, etc, the data is a data that explains an abnormal detection and abnormal content. When the home appliance is a device acting with charged power like digital camera 102, PDA 103, charging adaptor 105, shaver 108, etc, the data is a data that shows a charge end or a remaining charge time.

As the display device showing these data, usually it is TVmonitor 111. As described in the above, nowadays a plurality of TV monitors 111 are usually present at each home, and, for example, when there is a TV receiver at a living room where a family member often gets together, management server 101 sets in such a manner that top priority is given to a data display with that TV receiver. On the other hand, if frequency of the image of the digital camera shot by a kid being played back by the kid is high, the top priority may be given to the display on the TV receiver arranged at the kid room. As it may be better to select the display device according to the home appliance, it is preferable for a data for specifying a priority order when selecting the display device to be contained in the data from the home appliances. Once the priority order of the display devices is set up beforehand using operation button 24 of management server 101, even if the priority order is not specified with respect to a plurality of detected display devices, it is possible to select the display device in accordance with the priority order set up beforehand. In step S203 described in the above, the data transfer is directed to all the home appliances with the data for transfer, but the data transfer may be directed only to the home appliances at which the data transfer directive signal is detected.

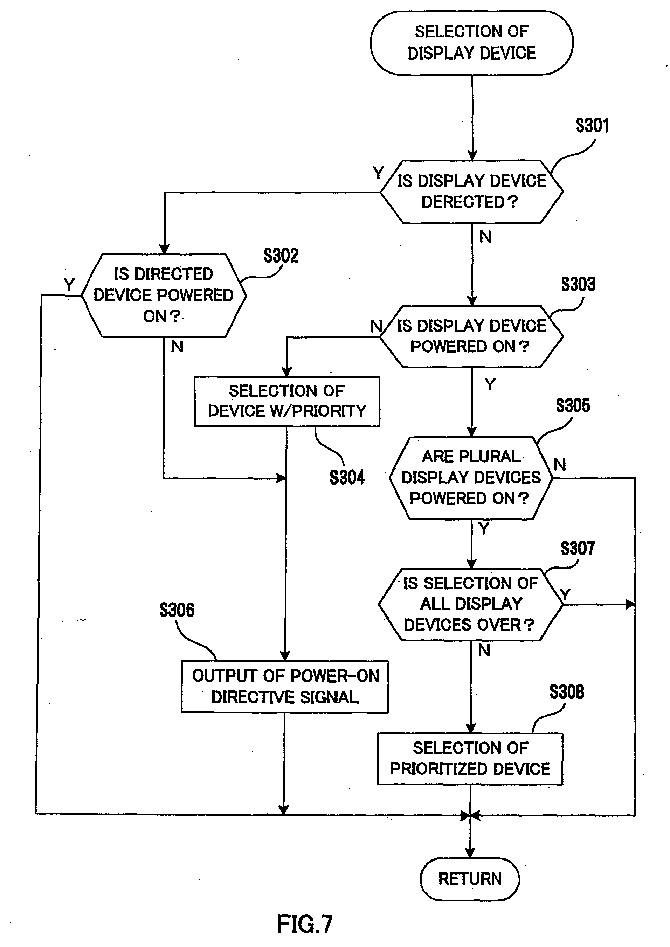

Based upon Fig. 7, an explanation about a method of selecting the display device with management server 101 will be given. In step S301, it is judged whether or not the data specifying the display device as described in the above is contained in the read-out data. When the display device is not specified, the flowproceeds to step S303, and when the device is specified, the flow proceeds to step S302. In step S302, it is judged whether or not the specified display device is turned ON, and when it is judged that the device is ON, the flow is ended, and when it is judged that the device is OFF, the flow proceeds to step S306, and a power-ON directive signal is transmitted to the specified display device. When there is no specified display device in step S301, it is judged in step S303 whether or not there is any display device with power-ON in the display devices connected on the network. When even one display device is not ON in the connected display devices, the flow proceeds to step S304, and the display device having the top priority selection is selected based upon the priority order set in management server 101 beforehand, and in step S306, the power-ON directive signal of this selected display device is transmitted. If the top-prioritized display device is set to cell telephone 107 in this case, the likelihood of the user carrying the cell telephone is so high that it becomes very effective even in the emergencies.

In step S303, when it is judged that there is at least one display device with power-ON, the flow proceeds to step S305, and it is judged whether or not a plurality of display devices is ON. If only one device is ON, this device is selected and the flow is ended. When the plurality of the display devices is ON, the flow proceeds to step S307, and then the display device for showing the data is selected herein. If management server 101 is set beforehand so as to select all display devices, all display devices with power-ON are selected so as to output the data to all of the display devices with power-ON, and the flow is ended. When management server 101 is set so as to output the data only to the selected display device, the flow proceeds to step S308, and similarly in step S304, one display device is selected from the display devices with power-ON in accordance with the priority order set beforehand, and the flow is ended. Or, management server 101 is to keep watching power-ON/OFF of each display device around the clock, and as it is highly likelihood that somebody is present nearby the display device with the shortest elapsed time after power-ON, this display device may be selected as the top-prioritized device in step S308.

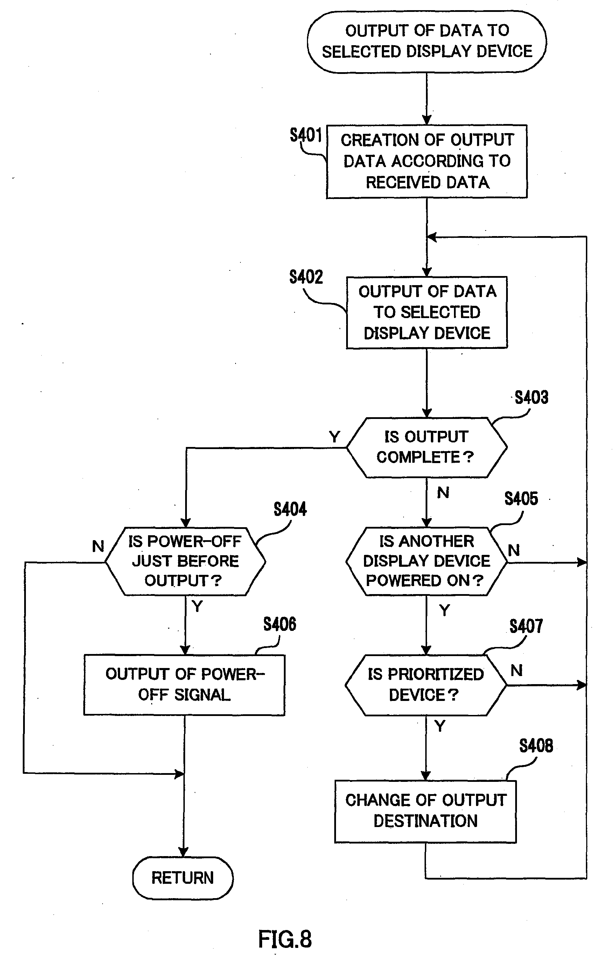

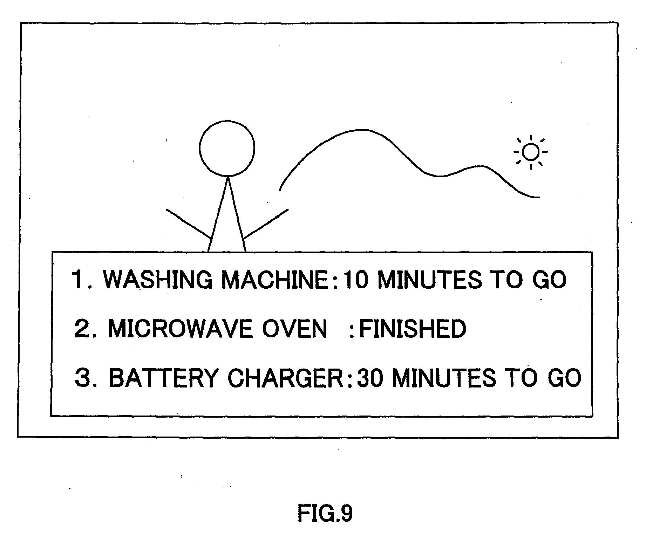

Based upon Fig. 8, a flow will be described that transmits a display data to the selected display device. When the display device already runs a regular program, and the like, it is necessary to implement a multiple display with a small screen in a part of the screen of the display device, or provide a superimposed display with a text data, so a directive data directing these displays is also output at the same time with the display data. First off, in step S401, a data to be shown on the display device is created based upon the data received from the home appliance. As the data to be created herein, when the received data is an image data from digital camera 102, an amount of data of the output image is adjusted by culling the image data or executing interpolation process to the data in conformity with a size of a display portion of the display device. This adjustment enables the image data required only for display to be output. Or, when the display device provides a monochrome display, optimum output data is created by converting a color image into a monochrome image, or changing a gamma property in conformity with a monitor property. When the data received from the home appliance is a data indicating a time-elapsed status of the timer device, the display data is created as needed in accordance with the status. Fig. 9 shows a case where these data are shown with a child screen in the usual TV broadcast. In this diagram, in step S401 of Fig. 8 described in the above, the data output from washing machine 115, microwave oven 114, and charging adaptor 105 are shown respectively by being converted into the given display forms. As the display form on top of them, when the image data is output from digital camera 102, etc, if a display change directive signal is created so as to provide not only the child screen display but also an entire screen display, the display screen can be switched over at a random timing by operating operation button 33. In addition, the text may be simply superimposed on the screen, and when the data is the one from the timer device, its elapsed-time state may be shown by a graphic display like the bar graph. Furthermore, in recent years, there is refrigerator 116, or microwave oven 114, and the like that is provided with a relatively large LCD panel. These LCD panels make it possible to show the elapsed-time status of the timer or the alarm display when the something abnormal arises with at least the text display. Like this, the device provided with any display means can be used as the display device. As a sound display such as the speaker, the buzzer, and the like is surely included in the display device as an display embodiment, a sound data is created with respect to such the display device.

In step S402, the display data created in accordance with the display device has been output to the selected display device for a given period of time, and in step S403, it is judged whether or not the output of the data is completed.
When the output of the data is completed, the flow proceeds to step S404, and when the output of the data is not yet completed, the flow proceeds to step S405. Here, an explanation about the given period of time for outputting the data will be given. When the output data is the image data, a period of time until management server 102 detects that digital camera 102 ceases to output the image data becomes the given period of time. More specifically, the case where the image is not output, for example, it is a case where the user turns off digital camera 102. When the display data is the one from the timer device, the alarm, and the like, the output data is the text or graphic data. In this case, the display data based upon the data received from each home appliance is shown on the display device for the given period of time at a time when the timer is started, the timer is ended, the alarm is started and the like or every certain time interval described in step S204 of Fig. 6. It is appropriate that this display period of time lies from 30 seconds to 2 minutes, and this display period of time can be set beforehand by management server 102.

When the display period of time in accordance with the output data is ended in step S403, the flow proceeds to step S404, and as judged in step S303 of Fig. 7 described in the above, it is judged whether or not the display device was OFF just before outputting the data. When the power was ON, this sequence is ended, and when the display device was OFF, in step S406, the power-OFF directive signal of the display device is output, and this sequence is ended. In step S403, when the output to the display device is not yet completed, the flow proceeds to step 5405, and herein, it is judged whether or not another display device is turned on while outputting the data. When another display device is not turned on, the flow gets back to step S402, and when another display device is turned on, the flow proceeds to step S407. In step S407, it is judged whether or not this newly power-on display device is the one with the display priority over the display device now showing the data. If the newly power-on display device is not the display device with the priority, the flow gets back to step S402, and when the newly power-on display device is the display device with the priority, a transmission destination of the output data is changed to this the display device with the priority in step S408, and the flow gets back to step S402. When all of the display devices are set so as to show the data on all of the display devices, it is a matter of course to follow this setting. And, in step S402, when the image data from digital camera 102 is shown on the display device, a simultaneous output of a directive signal also to digital camera 102 from management server 101 so as to turn off LCD monitor 37 of digital camera 102 allows for a power consumption of digital camera 102 to be reduced.

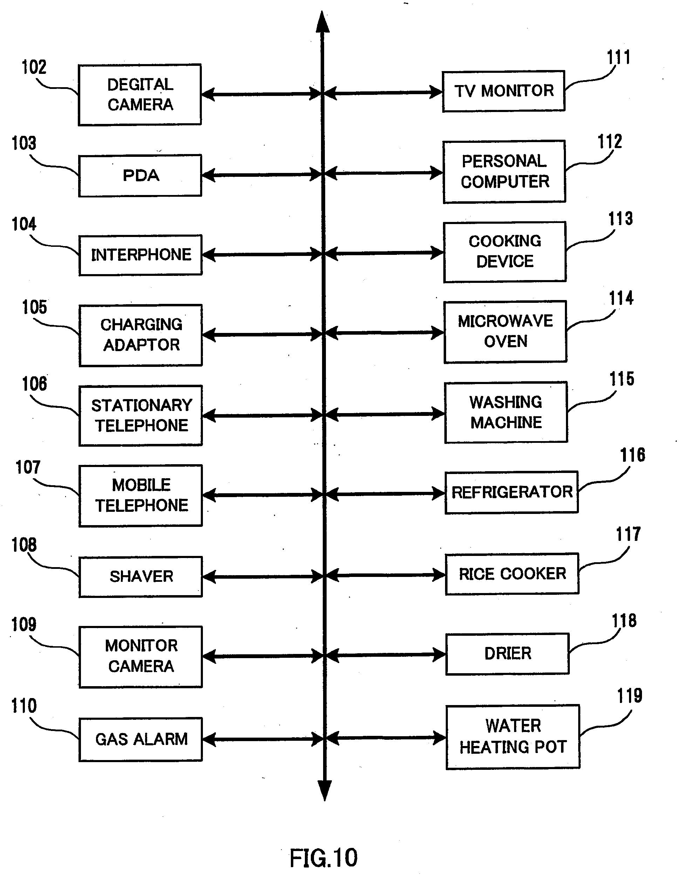

Next, a second example embodiment will be described based upon Fig. 10. Different from Fig. 1, Fig. 10 shows the example that each home appliance is directly connected to each other by a data transmission/reception standard between devices such as USB (Universal Serial Bus), Blue tooth, IrDA (Infrared Data Association), wireless LAN and the like not via management server 101. Home appliances composing the network of Fig. 10 are the same as those of Fig. 1 except for management server 101 that is not present in the network of Fig. 10, so the same symbols are used in Fig. 10. In this example, a connection method may be any of the wireless or wired method. These home appliances detect ID (identification) of respective home appliances, and transmit and receive a data in accordance with an action procedure set beforehand. At this moment, when it is detected that a plurality of the display devices is connected, the data is transmitted and received in accordance with the given priority order.

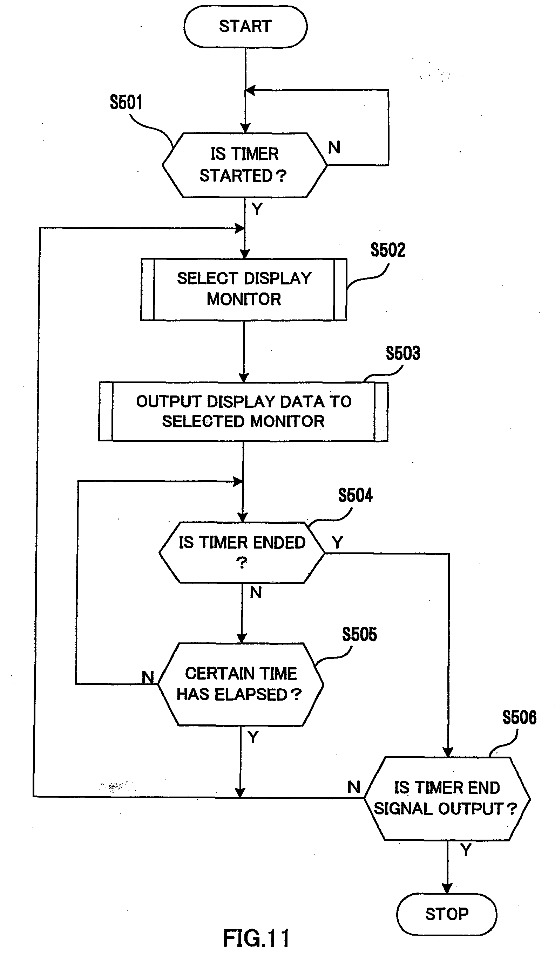

Fig. 11 is a flow chart explaining a method that the home appliance acted in accordance with the timer such as microwave oven 114, washing machine 115, charging adapter 105, etc selects another display device, and displays a progress of a timer action still under way. In step S501, it is judged whether or not the timer action set such as the time, etc is started. When a timer device desired to be operated by the user is selected, and the timer start of the timer device is directed, in step S502, the selected timer device selects another display device causing the start of the timer action to be shown from the display devices connected to the network. As the selection method of the device for display is the same flow explained in Fig. 7 when management server 11 selects the display device, its explanation is omitted herein. In step S503, the data for display is transmitted to the selected display device. This data transmission method is also the same when management server 101 transmits the data for display in Fig. 8, so its explanation is omitted, provided that, in step S401 of Fig. 8, management server 101 firstly creates the data corresponding to the display device in accordance with the received data, but in this case, the timer device creates the output data corresponding to the display device in accordance with the start of the timer action.

In step S504, it is judged whether the timer action is ongoing or ended. When the timer action is ended, the flow proceeds to step 5506, and when the timer action is ongoing, the flow proceeds to step S505. In step S505, as in step S204 of Fig. 6, it is judged whether or not the elapsed time has passed the certain time since the display data was previously shown on the display device. If the certain time has not elapsed, the flow gets back to step S504. At this moment, the device for display is implementing the same action as in steps S404 to 408. When the certain time has elapsed, the flow gets back to step S502. In step S504, when it is judged that the timer action is ended, the flow proceeds to step S506, where it is judged whether or not the data for display indicating the end of the timer action is output to the display device. When the data is not yet output, the flow gets back to step S502, and when the data is output, the flow is ended.

Although Fig. 11 explains the home appliance acted by a timer, the image data from monitor camera 109 and the like can be shown periodically by another display device likewise. When the home appliance is digital camera 102 and the like, and an image recorded in memory card 36 is played back by another display device, actions in steps S504 to S506 of Fig. 11 are unnecessary. Similar to the first example embodiment, the sound display may be shown on the display device in place of the image or the text.

In the above, various embodiments and modifications have been described, but the present invention is not limited to these contents. Conceivable other embodiments within the scope of the technical idea of the present invention are included within the scope of the present invention.

The present invention claims the benefits of Japanese Patent Applications Nos.2003-309626 (applied on Sep. 2, 2003) and 2003-309627 (applied on Sep. 2, 2003), of which are hereby incorporated by reference.

## Claims

1. An information process apparatus comprising:
an interface transmitting and receiving data between a plurality of display devices provided with a display portion of showing information and an electronic appliance;
a reception means of receiving a given data from the electronic appliance via the interface;
a judgment means of judging action status of the plurality of the display devices via the interface in accordance with a reception result of the given data by means of the reception means; and
an output means of outputting a given display signal to a display device of which the action state is judged to be in a given state out of the plurality of the display devices in accordance with the given data via the interface.

2. The information process apparatus set forth in claim 1, wherein the action state being the given state refers to a status of the display device being operable.

3. The information process apparatus set forth in claim 2, wherein the status of the display device being operable refers to a status of power of the display device being ON.

4. The information process apparatus set forth in claim 1, wherein, when the judgment means judges that there is a plurality of display devices of which the action state is in the given state, the output means further includes a selection means of selecting a given display device from the plurality of the display devices.

5. The information process apparatus set forth in claim 4, wherein the selection means selects all display devices of which the action state is in the given state.

6. The information process apparatus set forth in claim 4 further comprising:
a setting means of setting beforehand a priority order of a display device for showing the information, wherein the selection means selects the display device in accordance with the priority order.

7. The information process apparatus set forth in claim 4, wherein the reception means further receives a data of specifying a display device from the electronic appliance in addition to the given data, and the selection means selects a display device specified by the data of specifying a display device.

8. The information process apparatus set forth in claim 4 further comprising:
a time counting means of counting down an elapsed time since the display device is detected to be in a given action state, wherein the selection means selects a display device with a short elapsed time counted down by the time counting means.

9. The information process apparatus set forth in claim 1 further comprising:
a time counting means of counting down a given time interval, wherein the reception means receives a given data from the electronic appliance every given time interval counted down by the time counting means.

10. The information process apparatus set forth in claim 1, wherein the given data from the electronic appliance refers to a data that indicates a passage state in the middle of a given action being conducted by the electronic appliance.

11. The information process apparatus set forth in claim 1, wherein the given data from the electronic appliance refers to a data indicating that the electronic appliance starts a given action.

12. The information process apparatus set forth in claim 1, wherein the given data from the electronic appliance means a data indicating that the electronic appliance ends a given action.

13. The information process apparatus set forth in claim 1, wherein the output means outputs the given display signal for a given certain period of time.

14. An information process apparatus comprising:
an interface transmitting and receiving data between a plurality of display devices provided with a display portion of showing information and an electronic appliance;
a reception means of receiving a given data from the electronic appliance via the interface;
a judgment means of judging action status of the plurality of the display devices via the interface in accordance with a reception result of the given data by means of the reception means; and
a controller controlling so as to cause a given display device of the plurality of the display devices to be in an operable state in accordance with a judgment result of the judgment means via the interface.

15. The information process apparatus set forth in claim 14, wherein the operable state refers to a status of power of the display portion of the display device being ON.

16. The information process apparatus set forth in claim 14, further comprising:
an output means of outputting a given display signal to the display device in the operable state via the interface in accordance with the given data.

17. The information process apparatus set forth in claim 14, wherein the controller controls so as to cause all display devices judged to be in an inoperable state by the judgment device out of the plurality of display devices to become in an operable state.

18. The information process apparatus set forth in claim 14, further comprising:
a setting means of setting beforehand a priority order of a display device for showing the information, wherein the controller controls so as to cause the display device to be in an operable state in accordance with the priority order.

19. The information process apparatus set forth in claim 14, wherein the reception means further receives a data of specifying a display device from the electronic appliance in addition to the given data, and the controller controls so as to cause a display device specified by the data of specifying a display device to be in an operable state.

20. The information process apparatus set forth in claim 14, further comprising:
a time counting means of counting down a given time interval, wherein the reception means receives a given data from the electronic appliance every given time interval counted by the time counting means.

21. The information process apparatus set forth in claim 14, wherein the given data from the electronic appliance refers to a data that indicates a given action conducted by the electronic appliance still in progress.

22. The information process apparatus set forth in claim 14, wherein the given data from the electronic appliance refers to a data indicating that the electronic appliance starts a given action.

23. The information process apparatus set forth in claim 14, wherein the given data from the electronic appliance refers to a data indicating that the electronic appliance ends a given action.

24. The information process apparatus set forth in claim 14,
wherein the output means outputs the given display signal for a given certain period of time.

25. The information process apparatus set forth in claim 24,
wherein the controller causes the given display device to be in an inoperable state after the certain period of time has elapsed.

26. The information process apparatus set forth in claim 24,
wherein the given display device refers to a cell phone, and, when the judgment means judges any of the plurality of the display devices to be in an inoperable state, the controller controls so as to cause the cell phone to be in an operable state.

27. An information process apparatus comprising:
an interface transmitting and receiving data to and from a plurality of display devices provided with a display portion of showing information;
a controller controlling so as to receive a given data from a first display device of the plurality of the display devices, and transmit a given display signal to a second display device different from the first display device via the interface; and
a directive means of directing the controller to transmit the given display signal to the second display device, and simultaneously, the first display device so as to cause the display portion of the first display device to become in an inoperable state via the interface.

28. The information process apparatus set forth in any of claim 1, 14 or 27, wherein the interface transmits and receives the data to and from the plurality of the display devices via the network.

29. The information process apparatus set forth in any of claim 1, 6, 14, 18 or 27, wherein the information includes at least any of image information, graphic information or text information.

30. An electronic appliance comprising:
an interface transmitting and receiving data to and from a plurality of display devices provided with a display portion of showing information;
a judgment means of judging action status of the plurality of the display devices via the interface; and
an output means of outputting a given display signal to a display device of which the action state is judged to be in a given state by the judgment device out of the plurality of the display devices via the interface.

31. The electronic appliance set forth in claim 30, wherein the action state being in the given state refers to a status of the display device being in an operable state.

32. The electronic appliance set forth in claim 31, wherein the operable state refers to a status of power of the display portion of the display device being ON.

33. The electronic appliance set forth in claim 30, wherein, when the judgment means judges that there is a plurality of display devices of which the action state is in the given state, the output means further includes a selection means of selecting a given display device from the plurality of the display devices.

34. The electronic appliance set forth in claim 33, wherein the selection means selects all display devices of which the action state is in the given state.

35. The electronic appliance set forth in claim 33 further comprising:
a setting means of setting a priority order of a display device for showing the information, wherein the selection means selects the display device in accordance with the priority order.

36. The electronic appliance set forth in claim 30, wherein the given display signal refers to a signal that indicates a given action conducted by the electronic appliance still in progress.

37. The electronic appliance set forth in claim 30, wherein the given display signal refers to a signal indicating that the electronic appliance starts a given action.

38. The electronic appliance set forth in claim 30, wherein the given display signal refers to a signal indicating that the electronic appliance ends a given action.

39. The electronic appliance set forth in claim 30, wherein the output means outputs the given display signal for a given certain period of time.

40. The electronic appliance set forth in claim 30 further comprising:
a display portion of showing information; and
a directive means of directing the output means to output the given display signal to the display device of which the action state is in a given state, and simultaneously, directing the first display device so as to cause the display portion of the first display device to become in an inoperable state via the interface.

41. An electronic appliance comprising:
an interface transmitting and receiving data to and from a plurality of display devices provided with a display portion of showing information;
a judgment means of judging action status of the plurality of display devices via the interface; and
a controller controlling so as to cause a given display device of the plurality of the display devices to be in an operable state via the interface in accordance with a judgment result of the judgment means.

42. The electronic appliance set forth in claim 41, wherein the operable state refers to a status of power of the display portion of the display device being ON.

43. The electronic appliance set forth in claim 41 further comprising:
a display portion of showing information; and
a directive means of directing the controller so as to cause a given display device of the plurality of the display devices to be in an operable state, and simultaneously cause the display portion to become in an inoperable state.

44. The electronic appliance set forth in claim 41, wherein the given display device refers to a cell phone, and the controller controls so as to cause the cell phone to be in an operable state if the judgment means judges any of the plurality of the display devices to be in an inoperable state.

45. The electronic appliance set forth in claim 41, wherein the controller controls so as to cause all display devices judged to be in an inoperable state by the judgment means in the plurality of the display devices to be in an operable state.

46. The electronic appliance set forth in claim 41 further comprising:
a setting means of setting a priority order of a display device for showing the information, wherein the controller controls so as to cause the display device to be in an operable state in accordance with the priority order.

47. The electronic appliance set forth in claim 41 further comprising:
an output means of outputting a given display signal to the display device in the operable state via the interface.

48. The electronic appliance set forth in claim 47, wherein the given display signal refers to a signal that indicates a given action conducted by the electronic appliance still in progress.

49. The electronic appliance set forth in claim 47, wherein the given display signal refers to a signal that the electronic appliance starts a given action.

50. The electronic appliance set forth in claim 47, wherein the given display signal refers to a signal that the electronic appliance ends a given action.

51. The electronic appliance set forth in claim 47, wherein the output means outputs the given display signal for a given certain period of time.

52. The electronic appliance set forth in claim 51, wherein the controller causes the given display device to be in an inoperable state after the certain period of time has elapsed.

53. The electronic appliance set forth in any of claim 30 or 41, wherein the interface transmits and receives the data to and from the plurality of the display devices via a network.

54. The electronic appliance set forth in any of claim 30, 35, 41, 43 or 46, wherein the information includes at least any of image information, graphic information or text information.
